# FASCICULE DE BREVET EUROPEEN

(11) **EP 1 591 468 B1**
(45) Date de publication et mention de la délivrance du brevet: **19.10.2016**
(21) Numéro de dépôt: 05290820.9
(22) Date de dépôt: 14.04.2005
(51) Int. Cl.: C08G 69/02, C08G 69/04, C08G 69/26, C08G 69/36, C08G 83/00

(54) **Reactifs thermo-adhesifs a base des copolyamides ou copolyamide-bloc-polyethers reticulables**
Heissversiegelbare Reagenzien auf Copolyamid-Basis oder vernetzbare Copolyamid-Block-Polyether
Hot melt compounds made from copolyamides and crosslinkable copolyamide-block-polyethers

(30) Priorité: 26.04.2004 FR 0404382
(43) Date de publication de la demande: 02.11.2005
(73) Titulaire: ARKEMA FRANCE, 92700 Colombes (FR)
(72) Inventeur: Linnemann, Annett, 27550 Nassandres (FR); Briffaud, Thierry, 27300 Caorches St Nicolas (FR)
(74) Mandataire: Lhoste, Catherine

(56) Documents cités:
- FR-A- 2 766 197
- US-A- 3 470 079
- US-A- 5 378 798

## Description

### Domaine de l'invention

La présente invention concerne des polyamides branchés à extrémités insaturées. Ils peuvent être fabriqués par copolymérisation des monomères usuels formant les polyamides (lactames, acides alpha-oméga-aminocarboxyliques, diacides et diamines) en présence d'un monomère multifonctionnel (A) ayant plus de 2 fonctions et en utilisant un monoacide insaturé comme limiteur de chaîne. Le monomère multifonctionnel
(A) utilisé dans le cadre de l'invention est choisi parmi la diéthylenetriamine, l'acide mellitique, le pentaérythritol et le 2,2 diméthyloopropionique acide. Ces polyamides branchés à extrémités insaturées sont réticulables. Ils peuvent être réticulés facilement soit par la chaleur en utilisant des peroxydes comme initiateur soit par rayonnement UV (ou fusion sous UV) en utilisant des initiateurs sensibles aux UV soit par irradiation par des rayons gamma ou bêta. On peut les utiliser comme adhésifs réticulables ou pour le gainage de câbles électriques et en général pour obtenir des objets ayant des propriétés mécaniques et une tenue en température améliorées.

### L'art antérieur et le problème technique

Les colles (adhésifs) thermofusibles sont des matériaux thermoplastiques solides à la température ambiante et qui par chauffage (environ vers 180°C) deviennent des liquides plus ou moins visqueux. Ces liquides sont appliqués sur un premier substrat puis on le couvre avec une seconde surface. Par refroidissement, on obtient une adhérence entre le substrat et la deuxième surface. Le temps ouvert est la période pendant laquelle la colle qui a été appliquée sur un substrat qui est à la température ambiante reste collante, c'est-à-dire l'intervalle de temps pendant lequel on peut appliquer la seconde surface et par refroidissement obtenir une adhérence entre le substrat et la seconde surface. Passé ce délai du temps ouvert on ne peut plus obtenir une adhérence suffisante entre le substrat et la seconde surface. Ces colles peuvent aussi être disposées à l'état solide entre les deux matériaux à coller puis on chauffe l'ensemble, la colle fond et par refroidissement les deux matériaux sont collés l'un sur l'autre. Cette technique est utilisée dans l'industrie textile, la colle est sous forme de film ou de poudre qu'on dispose entre deux tissus puis à l'aide d'un fer chaud on provoque le collage. Ces colles sont désignées par l'abréviation HMA (hot melt adhesives) et sont parfois aussi désignées par le mot "thermoadhésifs".

Les polyamides classiquement utilisés comme thermoadhésifs dans le domaine textile (fixation des tissés et non-tissés), électronique (enrobage des fils de cuivre pour bobines ), ou automobile sont appliqués à des températures supérieures à leurs points de fusion et ils adhérent bien sur différentes surfaces. La tenue thermique des thermoadhésifs est donc limitée à leur point de fusion, et souvent déjà à 10°C en dessous de leur point de fusion, le produit devient mou et moins adhésif. Aujourd'hui on observe dans tous les domaines d'application qu'une augmentation de la performance des thermoadhésifs est demandée, comme par exemple une meilleure adhésion sur des surfaces traitées, des tenues thermiques plus élevées, ou une meilleure résistance du collage au nettoyage à la vapeur ou aux solvants de nettoyage à sec. Cette amélioration des performances doit se faire sans changer leur technologie d'application. Un moyen d'améliorer les performances d'un HMA est de le réticuler après le collage.

L'art antérieur a déjà décrit la réticulation des polyamides et des copolyamides. Les brevets DE 3725486**,** EP 940461**,** WO2002026887 décrivent une réticulation par des isocyanates. Les brevets WO2002086009**,** US6515048 décrivent une réticulation par des époxy. Le brevet EP326444 décrit une réticulation par un agent préalablement encapsulé. Le brevet US6111030décrit des polyamides à terminaisons amine pour réticuler des époxy, des polysulfures ou des cyanoacrylates. L'inconvénient de ces systèmes est l'utilisation nécessaire d'un coréactif qui peut être toxique comme les isocyanates, les acrylates, ou les résines époxydes. On a maintenant trouvé des copolyamides branchés à extrémités insaturées. La réaction de réticulation s'effectue par des groupements insaturés qui sont faciles à activer par irradiation (chaleur, UV,

UV+ micro ondes, rayons bêta ou gamma). Les monoacides insaturés utilisés comme limiteur de chaine permettent l'intégration directe du principe réactif dans le polymère, ce qui rend le produit applicable sans formulation supplémentaire.

L'art antérieur a déjà décrit des polyamides à extrémités insaturées. Le brevet US6680264 décrit des polyamides hydrodispersibles à extrémités insaturées, ces produits ne sont pas des HMA. Les brevets EP147267 et WO2003087193 décrivent des polyamides linéaires à extrémités insaturées.

L'avantage d'avoir plus de 2 extrémités insaturées est que la réaction de réticulation conduit à la formation d'un réseau tridimensionnel, par rapport à un simple allongement des chaînes. La réticulation est donc beaucoup plus rapide et plus efficace.

### Brève description de l'invention

La présente invention concerne des polyamides branchés à extrémités insaturées comprenant:
- au moins un motif provenant d'un monomère multifonctionnel (A) choisi parmi la diéthylène triamine, le pentaérythritol, l'acide mellitique et le 2,2-diméthylolpropionique acid,
- au moins des enchaînements résultant de la condensation en présence d'au moins un monoacide insaturé utilisé comme limiteur de chaîne,
   - soit d'au moins deux acides alpha,omega-aminocarboxyliques n'ayant pas le même nombre d'atomes de carbone,
      ➢ soit d'au moins deux lactames n'ayant pas le même nombre d'atomes de carbone,
      > soit d'au moins un lactame, au moins un diacide carboxylique et au moins une diamine,
      ➢ soit d'un lactame et/ou d'un acide alpha,omega-aminocarboxylique n'ayant pas le même nombre d'atomes de carbone,
      ➢ soit d'une diamine et d'un diacide,
   - soit d'au moins une diamine, d'au moins un diacide carboxylique et d'au moins un acide alpha,omega-aminocarboxylique,
la proportion de (A) étant inférieure à 9% en poids de l'ensemble de (A) et des monomères ci dessus.

Ils peuvent être fabriqués par condensation en présence d'un monoacide insaturé comme limiteur de chaîne, d'au moins un monomère multifonctionnel (A) choisi parmi la diéthylène triamine, le pentaérythritol, l'acide mellitique et le 2,2-diméthylolpropionique acide, avec - soit d'au moins deux acides alpha,omega-aminocarboxyliques n'ayant pas le même nombre d'atomes de carbone,
➢ soit d'au moins deux lactames n'ayant pas le même nombre d'atomes de carbone,
➢ soit d'au moins un lactame, au moins un diacide carboxylique et au moins une diamine,
➢ soit d'un lactame et/ou d'un acide alpha,omega-aminocarboxylique n'ayant pas le même nombre d'atomes de carbone,
➢ soit d'une diamine et d'un diacide,
le monomère multifonctionnel (A) pouvant être présent pendant la condensation des monomères des enchaînements polyamide ou ajouté ensuite et un catalyseur pouvant être ajouté, la proportion de (A) étant inférieure à 9% en poids de l'ensemble de (A) et des monomères ci-dessus.

L'invention concerne aussi des thermoadhésifs comprenant ces polyamides branchés à extrémités insaturées. Ils peuvent être réticulés facilement soit par la chaleur en utilisant des peroxydes comme initiateur soit par rayonnement UV (ou fusion sous UV) en utilisant des initiateurs sensibles aux UV soit par irradiation par des rayons gamma ou bêta.

L'invention concerne aussi l'utilisation de ces polyamides branchés à extrémités insaturées comme thermoadhésifs.

L'invention concerne aussi l'utilisation de ces polyamides branchés à extrémités insaturées pour gainer des câbles électriques.

### Description détaillée de l'invention

**S'agissant du monomère multifonctionnel (A),** on désigne ainsi tout produit sur lequel soit un lactame, après l'ouverture de son cycle, soit une diamine, soit un diacide peut réagir et se fixer. Les monomères fonctionnels (A) sont choisis parmi la diéthylenetriamine, l'acide mellitique, le pentaérythritol et le 2,2-diméthylolpropionique acide. Avantageusement la proportion de (A) est comprise entre 0,05 et 5% en poids de l'ensemble de (A) et des monomères ci-dessus. De préférence la proportion de (A) est comprise entre 0,05 et 2% en poids de l'ensemble de (A) et des monomères ci dessus.

**S'agissant des enchaînements polyamides** on peut citer les copolyamides résultant de la condensation d'au moins deux acides alpha-oméga-aminocarboxyliques (n'ayant pas le même nombre d'atomes de carbone) ou de deux lactames (n'ayant pas le même nombre d'atomes de carbone) ou d'un lactame et d'un acide alpha oméga aminocarboxylique

(n'ayant pas le même nombre d'atomes de carbone). On peut encore citer les copolyamides résultant de la condensation d'au moins un acide alpha oméga aminocarboxylique (ou un lactame), au moins une diamine et au moins un diacide dicarboxylique. On peut encore citer les polyamides résultant de la condensation soit d'un lactame ou d'un acide alpha-oméga-aminocarboxylique soit d'une diamine et d'un diacide.

A titre d'exemple de lactames on peut citer ceux ayant de 3 à 12 atomes de carbone sur le cycle principal et pouvant être substitués. On peut citer par exemple le β,β-diméthylpropiolactame, le α,α-diméthylpropiolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide dodécanedioïque, l'acide tetradécanedioïque, l'acide isophtalique, l'acide butanedioïque, l'acide 1,4 cyclohexanedicarboxylique, l'acide téréphtalique, le sel de sodium ou de lithium de l'acide sulphoisophtalique, les acides gras dimérisés (ces acides gras dimérisés ont une teneur en dimère d'au moins 98% et sont de préférence hydrogénés) et l'acide dodécanedioïque HOOC-(CH₂)₁₀-COOH.

La diamine peut être une diamine aliphatique ayant de 6 à 12 atomes de carbone, elle peut être arylique et/ou cyclique saturée. A titre d'exemples, on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPMD), la bis(aminocyclohéxyl) méthane (BACM), la bis(3-méthyl-4 aminocyclohéxyl) méthane (BMACM).

Avantageusement, les enchaînements copolyamides comprennent au moins du caprolactame et du lauryllactame. Selon une autre forme avantageuse, ils comprennent au moins du caprolactame, de l'hexaméthylène diamine et de l'acide adipique.

A titre d'exemples d'enchainements copolyamides, on peut citer ceux de caprolactame et de lauryl lactame (6/12), ceux de caprolactame, de lauryl lactame et d'acide amino 11 undécanoïque (6/11/12), ceux de caprolactame, d'acide adipique et d'hexaméthylène diamine (6/6-6), ceux de caprolactame, de lauryllactame, d'acide adipique et d'hexaméthylène diamine (6/12/6-6), ceux de caprolactame, de lauryllactame, d'acide amino 11 undécanoïque, d'acide azélaïque et d'hexaméthylène diamine (6/6-9/11/12), ceux de caprolactame, de lauryllactame, d'acide amino 11 undécanoïque, d'acide adipique et d'hexaméthylène diamine (6/6-6/11/12), ceux de lauryllactame, d'acide azélaïque et d'hexaméthylène diamine (PA 6-9/12).

**S'agissant du monoacide insaturé** on peut citer à titre d'exemple les acides acrylique, méthacrylique, cinnamique, crotonique, citraconique, itaconique, vinylacétique, undécylénique, maléique, fumarique, 5-norbornène-2 acrylique, 3-furan-2 acrylique, 3-pyrrole-2 acrylique, N-allyl aminobenzoïque N-acryloyl aminobenzoïque, N-méthacryloyl aminobenzoïque, acryloyloxybenzoïque, méthacryloyloxybenzoïque, N-acryloyl ou N-méthacryloyl p- aminophénylacétique, N-allyl amino-11-undécanoïque. On ne sortirait pas du cadre de l'invention en utilisant un mélange de deux ou plusieurs de ces acides. On peut aussi utiliser les sels et les esters de ces acides.

**S'agissant du procédé de synthèse** de ces copolyamides c'est la technique habituelle de synthèse des polyamides ou copolyamides pourvu qu'on effectue la condensation des monomères des enchaînements polyamide en présence d'un monoacide insaturé comme limiteur de chaîne. Selon une forme avantageuse, il est recommandé d'ajouter une diamine en excès pour assurer la fixation de la totalité d'acide insaturé sur le polymère, et pour favoriser une addition de type Michael (addition d'amine sur double liaison) comme réaction de réticulation.

Le monomère multifonctionnel (A) au sens de la présente invention peut être présent pendant la condensation des monomères des enchaînements polyamide ou ajouté ensuite et un catalyseur peut être ajouté. Il est recommandé si les fonctions du monomère multifonctionnel (A) sont des OH d'ajouter un catalyseur. Ce catalyseur peut être ajouté en début de réaction ou après la condensation des monomères des enchaînements polyamide. Ce catalyseur peut être celui qu'on utilise pour condenser des blocs polyamides à extrémités carboxyliques et des diols tels que par exemple des polyéthylène glycols ou des polytetraméthylene glycols. Ces catalyseurs sont utilisés dans la préparation des copolymères à blocs polyéthers et blocs polyamides.

Le catalyseur est avantageusement un dérivé d'un métal (M) choisi dans le groupe formé par le titane, le zirconium et l' hafnium.

A titre d'exemple de dérivé on peut citer les tétraalcoxydes qui répondent à la formule générale M(OR)₄, dans laquelle M représente le titane, le zirconium ou l'hafnium et les R, identiques ou différents, désignent des radicaux alcoyles, linéaires ou ramifiés, ayant de 1 à 24 atomes de carbone.
Les radicaux alcoyles en C₁ à C₂₄ parmi lesquels sont choisis les radicaux R des tétraalcoxydes utilisés comme catalyseurs dans le procédé suivant l'invention sont par exemple tels que méthyle, éthyle, propyl, isopropyl, butyle, éthylhexyl, décyl, dodécyl, hexadodécyl. Les catalyseurs préférés sont les tétraalcoxydes pour lesquels les radicaux R, identiques ou différents, sont des radicaux alcoyles en C₁ à C₈. Des exemples de tels catalyseurs sont notamment Zᵣ (OC₂H₅)₄, Zᵣ (O-isoC₃H₇)₄, Zᵣ(OC₄H₉)₄, Zᵣ(OC₅H₁₁)₄, Zᵣ(OC₆H₁₃)₄, H_{f}(OC₂H₅)₄, H_{f}(OC₄H₉)₄, H_{f}(O-isoC₃H₇)₄.

Le catalyseur utilisé peut consister uniquement en un ou plusieurs des tétraalcoxydes de formule M(OR)₄ définis précédemment. Il peut encore être formé par l'association d'un ou plusieurs de ces tétraalcoxydes avec un ou plusieurs alcoolates alcalins ou alcalino-terreux de formule (R₁O)ₚY dans laquelle R₁ désigne un reste hydrocarboné, avantageusement un reste alcoyle en C₁ à C₂₄, et de préférence en C₁ à C₈, Y représente un métal alcalin ou alcalino-terreux et p est la valence de Y. Les quantités d'alcoolate alcalin ou alcalino-terreux et de tétraalcoxydes de zirconium ou d'hafnium que l'on associe pour constituer le catalyseur mixte peuvent varier dans de larges limites. On préfère toutefois utiliser des quantités d'alcoolate et de tétraalcoxydes telles que la proportion molaire d'alcoolate soit sensiblement égale à la proportion molaire de tétraalcoxyde.

La proportion pondérale de catalyseur, c'est-à-dire du ou des tétraalcoxydes lorsque le catalyseur ne renferme pas d'alcoolate alcalin ou alcalino-terreux ou bien de l'ensemble du ou des tétraalcoxydes et du ou des alcoolates alcalins ou alcalino-terreux lorsque le catalyseur est formé par l'association de ces deux types de composés, varie avantageusement de 0,01 à 5 % du poids du mélange des enchaînements polyamide et du monomère multifonctionnel (A), et se situe de préférence entre 0,05 et 2 % de ce poids.

A titre d'exemple d'autres dérivés, on peut citer aussi les sels du métal (M) en particulier les sels de (M) et d'un acide organique et les sels complexes entre l'oxyde de (M) et/ou l'hydroxyde de (M) et un acide organique. Avantageusement l'acide organique peut être l'acide formique, l'acide acétique, l'acide propionique, l'acide butyrique, l'acide valérique, l'acide caproïque, l'acide caprylique, l'acide lauryque, l'acide myristique, l'acide palmitique, l'acide stéarique, l'acide oléique, l'acide linoléique, l'acide linolénique, l'acide cyclohexane carboxylique, l'acide phénylacétique, l'acide benzoïque, l'acide salicylique, l'acide oxalique, l'acide malonique, l'acide succinique, l'acide glutarique, l'acide adipique, l'acide maléique, l'acide fumarique, l'acide phtalique et l'acide crotonique. Les acides acétique et propionique sont particulièrement préférés. Avantageusement M est le zirconium. Ces sels peuvent s'appeler sels de zirconyle. La demanderesse sans être liée par cette explication pense que ces sels de zirconium et d'un acide organique ou les sels complexes cités plus haut libèrent ZrO⁺⁺ au cours du procédé. On utilise le produit vendu sous le nom d'acétate de zirconyle. La quantité à utiliser est la même que pour les dérivés M(OR)₄.

Ces catalyseurs sont décrits dans les brevets US 4,332,920, US 4,230,838, US 4,331,786, US 4,252,920, JP 07145368A, JP 06287547A, et EP 613919.

La préparation des polyamides est décrite par exemple dans Kunststoff-Handbuch, 3 Technishe Thermoplaste, 4 Polyamide, 1998, Carl Hanser Verlag München.

Avantageusement la masse molaire moyenne en poids *M̅w̅* est comprise entre 10 000 et 30 000 g/mol. Le MFI (abréviation de melt Flow Index ou indice de fluidité à l'état fondu) peut être compris entre 5 et 35 g/10 min (130°C, 2,16 kg)

**S'agissant de la réticulation** l'avantage des produits de la présente invention est qu'on les utilise comme des thermoadhésifs conventionnels avec les mêmes machines. Après avoir collé les matériaux, on effectue la réticulation.

Ils peuvent être réticulés facilement soit par la chaleur en utilisant des peroxydes comme initiateur soit par rayonnement UV (ou fusion sous UV) en utilisant des initiateurs sensibles aux UV soit par irradiation par des rayons gamma ou bêta.
La source de chaleur peut être un rayonnement infrarouge, la réticulation se fait entre 30 secondes et 5 minutes. Si on réticule sous UV ou sous UV et micro ondes, la réticulation se fait entre 15 et 30 secondes. Quant à la réticulation sous rayonnement gamma ou bêta la réticulation se fait en moins d'une seconde.

L'activation par la chaleur n'impose pas d'investissements supplémentaires. Le moment et le taux de la réticulation peuvent être contrôlés par le choix du peroxyde avec la température d'activation la mieux adaptée. La réticulation par UV permet de séparer la période d'application du produit à l'état fondu de la période de réticulation, bien que la réticulation soit plus efficace en combinaison avec un réchauffement du produit, comme par les micro-ondes. L'avantage d'utiliser des rayons bêta ou gamma pour réticuler est que c'est presque instantané et qu'aucun initiateur n'est nécessaire.

### Exemples

Exemple 1: On condense de l'acide amino-11-undécanoïque du caprolactame et du lauryllactame en présence de diéthylène triamine (DETA), d'acide crotonique et d'héxaméthylène diamine.
Exemple 2: On condense de l'acide amino-11-undécanoïque, du caprolactame, du lauryllactame, de l'hexaméthylène diamine et de l'acide adipique en présence de pentaérythritol et d'acide crotonique. On ajoute ensuite 6g d'un mélange d'acétate de zirconium et de butylate de zirconium sous une pression absolue de 70 mbar-50 mbar et une température de 240°C. On arrête la réaction quand il n'y a plus d'évolution de la viscosité.
Exemple 3: On condense de l'acide amino-11-undécanoïque, du caprolactame et du lauryllactame en présence de diéthylène triamine (DETA), d'acide undécylénique et d'hexaméthylène diamine.
Exemple 4: On condense du caprolactame, l'acide adipique et d'hexaméthylène diamine et du lauryllactame en présence de diéthylène triamine (DETA) et d'acide undécylénique.

Les résultats sont présentés dans le tableau 1.

**Tableau 1**

| | | MFI | Taux des gels en % (montre une réticulation) | | Taux des gels en % (montre une réticulation) | | DMA | |
|---|---|---|---|---|---|---|---|---|
| | | en g/10min | avec 2% peroxide | | avec 4% benzophénone | | G' à 160°C en MPa | |
| | | 2,16 kg à 130°C | traitement dans malaxeur brabender | | après UV fusion (lampe D, 350-450 nm, 1100mJ./cm²) | | après traitement sous les rayons bêta | |
| Exemple | composition en pourcent des masses des matières premières | | Luperox® 230, à 155°C | Luperox® 231 à 140°C | 26 sec | 13 sec | 50kGy | 100kGy |
| 1 | 6/11/12 = 35/30/35 + 0,2% DETA + 1,6% acide crotonique + 1,14% HMDA | 19 | 78,8% | 80,4% | 83,90% | 32,80% | 0,18 | 0,27 |
| 2 | 6/6.6/11/12 = 30/15/10/45 +1,37% Pentaerytrhitol + 3,46 % acide crotonique | 21,4 | 79,8% | 78,2% | 86,40% | 37,20% | 0,018 | 0,09 |
| 3 | 6/11/12 = 35/30/35 + 0,2% DETA + 3,62% acide undécylénique + 1,14% HMDA | 11 | - | - | - | 67,6% | 0,64 | 1,12 |
| 4 | 6/6.6/12 =40/25/35 + 0,2% DETA + 3,62% acide undécylénique + 1,14% HMDA | 8,8 | | - | - | 46,3% | 0,75 | 1,05 |

| | | | | | | | | |
|---|---|---|---|---|---|---|---|---|
| Luperox® 230 désigne n-butyl-4,4-di(tert-butylperoxy)valerate CAS N° 995-33-5 Luperox® 231 désigne 1,1-di(tert-butylperoxy)-3,3,5-trimethylcyclohexane CAS N° 6731-36-8 DMA désigne analyse mécanique dynamique. | | | | | | | | |

## Revendications

1. Polyamides branchés à extrémités insaturées constitués de:
• au moins un motif provenant d'un monomère multifonctionnel (A) choisi parmi la diéthylène triamine, le pentaérythritol l'acide, mellitique et le 2,2-diméthylolpropionique acide,
• au moins des enchaînements résultant de la condensation en présence d'au moins un monoacide insaturé utilisé comme limiteur de chaîne,
- soit d'au moins deux acides alpha,oméga-aminocarboxyliques n'ayant pas le même nombre d'atomes de carbone,
- soit d'au moins deux lactames n'ayant pas le même nombre d'atomes de carbone,
- soit d'au moins un lactame, au moins un diacide carboxylique et au moins une diamine,
- soit d'un lactame et/ou d'un acide alpha-oméga-aminocarboxylique n'ayant pas le même nombre d'atomes de carbone,
- soit d'une diamine et d'un diacide,
- soit d'au moins une diamine, d'au moins un diacide carboxylique et d'au moins un acide alpha,omega-aminocarboxylique,
la proportion de (A) étant inférieure à 9% en poids de l'ensemble de (A) et des monomères ci-dessus.

2. Polyamides selon la revendication 1 dans lesquels les enchaînements copolyamides comprennent au moins du caprolactame et du lauryllactame.

3. Polyamides selon la revendication 1 dans lesquels les enchaînements copolyamides comprennent au moins du caprolactame, de l'hexaméthylène diamine et de l'acide adipique.

4. Polyamides selon l'une quelconque des revendications précédentes dans lesquels le monoacide insaturé est l'acide crotonique ou l'acide undécylénique.

5. Procédé de fabrication des polyamides selon l'une quelconque des revendications précédentes dans lequel on effectue la condensation en présence d'un monoacide insaturé comme limiteur de chaîne, d'au moins un monomère multifonctionnel (A) choisi parmi la diéthylène triamine, le pentaérythritol, l'acide mellitique et le 2,2-diméthylolpropionique acide, avec
- soit d'au moins deux acides alpha,oméga-aminocarboxyliques n'ayant pas le même nombre de carbone,
- soit d'au moins deux lactames n'ayant pas le même nombre d'atomes de carbone,
- soit d'au moins un lactame, au moins un diacide carboxylique et au moins une diamine,
- soit d'un lactame et/ou d'un acide alpha-oméga-aminocarboxylique n'ayant pas le même nombre de carbone,
- soit d'une diamine et d'un diacide,
- soit d'au moins une diamine, d'au moins un diacide carboxylique et
d'au moins un acide alpha,omega-aminocarboxylique.
le monomère multifonctionnel (A) pouvant être présent pendant la condensation des monomères des enchaînements polyamide ou ajouté ensuite et un catalyseur pouvant être ajouté,
la proportion de (A) étant inférieure à 9% en poids de l'ensemble de (A) et des monomères ci-dessus.

6. Thermoadhésifs comprenant les polyamides branchés à extrémités insaturées selon l'une quelconque des revendications 1 à 4.

7. Utilisation comme thermoadhésifs des polyamides branchés à extrémités insaturées de l'une quelconque des revendications 1 à 4.

8. Utilisation des polyamides branchés à extrémités insaturées de l'une quelconque des revendications 1 à 4 pour gainer des câbles électriques.

## Patentansprüche

1. Verzweigte Polyamide mit ungesättigten Enden, bestehend aus:
• mindestens einer Einheit, die aus einem multifunktionellen Monomer (A), das aus Diethylentriamin, Pentaerythritol, Mellitsäure und 2,2-Dimethylolpropionsäure ausgewählt ist, stammt,
• mindestens Ketten, die sich aus der Kondensation in Gegenwart mindestens einer als Kettenabbruchmittel verwendeten ungesättigten Monosäure
- entweder mindestens zwei alpha, omega-Aminocarbonsäuren, die nicht die gleiche Zahl von Kohlenstoffatomen aufweisen,
- oder mindestens zwei Lactamen, die nicht die gleiche Zahl von Kohlenstoffatomen aufweisen,
- oder mindestens einem Lactam, mindestens einer Dicarbonsäure und mindestens einem Diamin
- oder mindestens einem Lactam und/oder einer alpha, omega-Aminocarbonsäure, die nicht die gleiche Zahl von Kohlenstoffatomen aufweisen,
- oder einem Diamin und einer Disäure
- oder mindestens einem Diamin, mindestens einer Dicarbonsäure und mindestens einer alpha, omega-Aminocarbonsäure
ergeben,
wobei der Anteil von (A) weniger als 9 Gew.-%, bezogen auf die Gesamtheit von (A) und den obigen Monomeren, beträgt.

2. Polyamide nach Anspruch 1, wobei die Copolyamidketten mindestens Caprolactam und Lauryllactam umfassen.

3. Polyamide nach Anspruch 1, wobei die Copolyamidketten mindestens Caprolactam, Hexamethylendiamin und Adipinsäure umfassen.

4. Polyamide nach einem der vorhergehenden Ansprüche, wobei es sich bei der ungesättigten Monosäure um Crotonsäure oder Undecylensäure handelt.

5. Verfahren zur Herstellung von Polyamiden nach einem der vorhergehenden Ansprüche, bei dem die Kondensation in Gegenwart einer ungesättigten Monosäure als Kettenabbruchmittel, mindestens eines multifunktionellen Monomers (A), das aus Diethylentriamin, Pentaerythritol, Mellitsäure und 2,2-Dimethylolpropionsäure ausgewählt ist,
- entweder mindestens zwei alpha, omega-Aminocarbonsäuren, die nicht die gleiche Zahl von Kohlenstoffatomen aufweisen,
- oder mindestens zwei Lactamen, die nicht die gleiche Zahl von Kohlenstoffatomen aufweisen,
- oder einem Lactam, mindestens einer Dicarbonsäure und mindestens einem Diamin
- oder mindestens einem Lactam und/oder einer alpha, omega-Aminocarbonsäure, die nicht die gleiche Zahl von Kohlenstoffatomen aufweisen,
- oder einem Diamin und einer Disäure
- oder mindestens einem Diamin, mindestens einer Dicarbonsäure und mindestens einer alpha, omega-Aminocarbonsäure
durchgeführt wird, wobei das multifunktionelle Monomer (A) während der Kondensation der Monomere der Polyamidketten vorliegt oder danach zugegeben werden kann und ein Katalysator zugegeben werden kann,
wobei der Anteil von (A) weniger als 9 Gew.-%, bezogen auf die Gesamtheit von (A) und den obigen Monomeren, beträgt.

6. Heißkleber, umfassend die verzweigten Polyamide mit ungesättigten Enden nach einem der Ansprüche 1 bis 4.

7. Verwendung der verzweigten Polyamide mit ungesättigten Enden gemäß einem der Ansprüche 1 bis 4 als Heißkleber.

8. Verwendung der verzweigten Polyamide mit ungesättigten Enden nach einem der Ansprüche 1 bis 4 zum Umhüllen von Elektrokabeln.

## Claims

1. Branched polyamides with unsaturated ends, consisting of:
• at least one unit originating from a multifunctional monomer (A) chosen from diethylenetriamine, pentaerythritol, mellitic acid and 2,2-dimethylolpropionic acid,
• at least chains resulting from the condensation, in the presence of at least one unsaturated monoacid used as chain limiter,
- either of at least two alpha, omega-aminocarboxylic acids not having the same number of carbon atoms,
- or of at least two lactams not having the same number of carbon atoms,
- or of at least one lactam, at least one dicarboxylic acid and at least one diamine,
- or of a lactam and/or of an alpha, omega-aminocarboxylic acid not having the same number of carbon atoms,
- or of a diamine and of a diacid,
- or of at least one diamine, of at least one dicarboxylic acid and of at least one alpha, omega-aminocarboxylic acid,
the proportion of (A) being less than 9% by weight of all of (A) and the above monomers.

2. Polyamides according to Claim 1, wherein the copolyamide chains comprise at least caprolactam and lauryllactam.

3. Polyamides according to Claim 1, wherein the copolyamide chains comprise at least caprolactam, hexamethylenediamine and adipic acid.

4. Polyamides according to any one of the preceding claims, wherein the unsaturated monoacid is crotonic acid or undecylenic acid.

5. Process for the production of polyamides according to any one of the preceding claims, wherein condensation is carried out, in the presence of an unsaturated monoacid as chain limiter, of at least one multifunctional monomer (A) chosen from diethylenetriamine, pentaerythritol, mellitic acid and 2,2-dimethylolpropionic acid, with
- either at least two alpha, omega-aminocarboxylic acids not having the same number of carbons,
- or at least two lactams not having the same number of carbon atoms,
- or at least one lactam, at least one dicarboxylic acid and at least one diamine,
- or a lactam and/or an alpha, omega-aminocarboxylic acid not having the same number of carbons,
- or a diamine and a diacid,
- or at least one diamine, at least one dicarboxylic acid and at least one alpha, omega-aminocarboxylic acid,
the multifunctional monomer (A) possibly being present during the condensation of the monomers of the polyamide chains, or added subsequently and a catalyst possibly being added,
the proportion of (A) being less than 9% by weight of all of (A) and the above monomers.

6. Hot-melt adhesives comprising the branched polyamides with unsaturated ends according to any one of Claims 1 to 4.

7. Use, as hot-melt adhesives, of the branched polyamides with unsaturated ends according to any one of Claims 1 to 4.

8. Use of the branched polyamides with unsaturated ends according to any one of Claims 1 to 4, for sheathing electrical cables.
